# EUROPÄISCHE PATENTANMELDUNG

(11) **EP 2 480 040 A1**
(43) Veröffentlichungstag der Anmeldung: **25.07.2012**
(21) Anmeldenummer: 11000313.4
(22) Anmeldetag: 17.01.2011
(51) Int. Cl.: H04W 84/18, H04W 92/16, H04L 12/28

(54) **Funknetzwerk mit geringer Leistungsaufnahme und Verfahren zum Betrieb eines solchen Funknetzwerks**

(71) Anmelder: Landis + Gyr (Europe) AG, 6300 Zug (CH)
(72) Erfinder: Hohl, Heinz, 6340 Baar (CH)
(74) Vertreter: Rentsch Partner AG

(57) **Zusammenfassung**

Ein Funknetzwerk mit geringer Leistungsaufnahme, insbesondere ein so genanntes Low Rate Wireless Personal Area Network (LR-WPAN), umfasst eine erste Bitübertragungseinheit (1a. Phyiscal Layer) und eine daran angeschlossene erste Sicherungseinheit (2a, Medium Access Layer), wobei auf dieser ersten Sicherungseinheit (2a) eine erste übergeordnete Netzwerkeinheit (3a, Application Layer) angeordnet ist, dadurch gekennzeichnet, dass zwischen der ersten Sicherungseinheit (2a) und der ersten übergeordneten Netzwerkeinheit (3a) eine erste Netzwerkbrückenanordnung (4) über eine nachgeschaltete Verbindungsstruktur (5) mit einer zweiten Netzwerkbrückenanordnung (6) verbunden ist, die eine zweite übergeordnete Netzwerkeinheit (3b) mit der ersten übergeordneten Netzwerkeinheit (3a) verbindet.

## Beschreibung

Die vorliegende Erfindung fällt in das Gebiet der Netzwerke; sie betrifft ein Funknetzwerk mit geringer Leistungsaufnahme und ein Verfahren zum Betrieb eines solchen Funknetzwerks.

### Stand der Technik

Funknetzwerke mit geringer Leistungsaufnahme sind bekannt in Verbindung mit der Norm IEEE 802.15.4, die spezialisiert ist auf so genannten "Low Rate Wireless Personal Area Networks" (Low Rate WPAN). Diese Funknetzwerke arbeiten auf der einen Seite mit kleinen Datenübertragungsraten und weisen auf der anderen Seite den besonderen Vorteil einer langen Batterielebensdauer derjenigen Geräte oder Objekte auf, die mit diesem Funknetzwerk ausgestattet sind; die Batterielebensdauer kann dabei bis zu einigen Jahren reichen, was den Wartungsaufwand entsprechend verringert.

Funknetzwerke gemäss IEEE 802.15.4 umfassen im Wesentlichen eine Bitübertragungseinheit (Physical Layer, PHY) eine Sicherungseinheit (Medium Access Layer, MAC) und eine proprietäre, übergeordnete Netzwerkeinheit (Application Layer). Solche übergeordneten Netzwerkeinheiten sind beispielsweise bekannt unter den Bezeichnungen 6loWPAN, ZigBee, WirelessHART oder MiWi, wobei diese Liste genannter Netzwerkeinheiten nicht abschliessend ist.

Allen übergeordneten Netzwerkeinheiten ist gemeinsam, dass sie Übertragungsreichweite von einigen 10 Metern innerhalb von Gebäuden aufweisen, wobei sich die Reichweite durch armierte Betonwände, Interferenzen, Störungen oder durch Geräteinstallationen in metallischen Schaltschränken verringern kann. Solche Probleme werden in der Regel durch zusätzliche Installationen von Routern oder Netzwerkkoordinatoren behoben, womit zwar die Anzahl Netzwerksprünge untereinander kommunizierender Objekte vergrössert wird, aber auf der anderen Seite eine Kommunikation überhaupt erst stattfinden kann.

Tatsache ist, dass sich solche zusätzlichen Installationen von Routern oder Netzwerkkoordinatoren in Gebäuden mit zahlreichen Stockwerken oder in sehr grossen Gebäuden als aufwendig darstellen, nicht nur in Bezug auf die verbaute Hardware, sondern zudem in den zahlreichen -und damit zeitintensiven- Netzwerksprüngen zwischen kommunizierenden Geräten.

Anwender der hier in Rede stehenden Funknetzwerke mit niedriger Leistungsaufnahme beugen sich derzeit dem erhöhten Installationsaufwand, um die ansonsten geschätzten Vorteile solcher Funknetzwerke nutzen zu können.

### Darstellung der Erfindung

Es ist deshalb Aufgabe der vorliegenden Erfindung, ein Funknetzwerk mit geringer Leistungsaufnahme dahingehend weiterzubilden, so dass die oben beschriebene, begrenzte Übertragungsreichweite auf einfache Weise erweitert werden kann und dabei die zahlreiche Zusatzinstallation von Routern oder Netzwerkkoordinatoren sich entsprechend erübrigt; es ist ferner Aufgabe der vorliegenden Erfindung ein Verfahren zum Betrieb eines solchen Funknetzwerks mit geringer Leistungsaufnahme dahingehend weiterzubilden, dass eine Kommunikation zwischen Geräten mit möglichst wenigen Netzwerksprüngen erfolgen kann.

Die der Erfindung für das Funknetzwerk mit geringer Leistungsaufnahme zugrunde liegende Aufgabe wird gelöst durch die Merkmale des Anspruchs 1; die diesen Erfindungsgedanken weiterbildenden Merkmale sind Gegenstand der Unteransprüche 2 bis 8.

Der Kern der Erfindung hinsichtlich des Funknetzwerks mit geringer Leistungsaufnahme ist, dass eine erste Bitübertragungseinheit (Phyiscal Layer) und eine daran angeschlossenen erste Sicherungseinheit (Medium Access Layer) mit einer ersten übergeordneten Netzwerkeinheit in Wirkverbindung stehen, wobei zwischen der ersten Sicherungseinheit und der ersten übergeordneten Netzwerkeinheit eine erste Netzwerkbrückenanordnung über eine nachgeschaltete Verbindungsstruktur mit einer zweiten Netzwerkbrückenanordnung verbunden ist, um eine zweite übergeordnete Netzwerkeinheit mit der ersten übergeordneten Netzwerkeinheit zwecks Kommunikation zu verbinden; mittels der erfindungsgemässen Verbindungsstruktur und der Netzwerkbrückeneinheiten werden also zwei übergeordnete Netzwerkeinheiten, die ansonsten keine gemeinsam Abdeckung aufweisen, auf einfache Weise unmittelbar verbunden und bilden somit eine erweiterte Netzwerkstruktur, wobei sich alle Funktionen in dieser erweiterten Netzwerkstruktur gleich verhalten, wie in einem reinen Netzwerk mit vollständiger Abdeckung.

Mit Vorteil lassen sich nun so genannte Low Rate Wireless Personal Area Network (LR-WPAN) ohne gemeinsame Abdeckung mittels der Verbindungsstruktur und den Netzwerkbrückeneinheiten verbinden, ohne dass auf eine Vielzahl von Routern oder Netzwerkkoordinatoren zurückgegriffen werden muss; die Verbindung über die Verbindungsstruktur ist dabei quasi unabhängig von deren Länge und ein Datentransfer über die Verbindungsstruktur benötigt dabei lediglich etwa die gleiche Zeit, wie zwei Netzwerksprünge (Hops).

Die Verbindungsstruktur kann mit Vorteil bidirektional als Drahtverbindung, als Funkverbindung oder als eine Lichtleiterverbindung ausgebildet sein, wobei eine Lichtleiterverbindung -und hierunter insbesondere eine Kunststofflichtleiterverbindung- von grösstem Vorteil ist. Kunststofflichtleiterverbindungen (Plastic Optical Fiber, POF) sind nämlich preiswert und mit einfachen Mitteln installierbar; zudem sind gemäss üblichen Installationsvorschriften für Elektroanlagen, Lichtleiterverbindungen unmittelbar neben elektrischen Stromleitungen installierbar, da zwischen ihnen keine elektrischen Fehler oder Störungen auftreten können.

Für Hausinstallationen hat sich bei den übergeordneten Netzwerkeinheiten der so genannte ZigBee-Standard (IEEE 802.15.4) etabliert, womit in einem Keller installierte Energiezähler beispielsweise mit Anzeigegeräten oder Verbrauchsgeräten in jeder einzelnen Wohnung eines Gebäudes kommunizieren können.

Die der Erfindung für das Verfahren zum Betrieb eines Funknetzwerks mit geringer Leistungsaufnahme zugrunde liegende Aufgabe wird gelöst durch die Merkmale des Anspruchs 9; die diesen Erfindungsgedanken weiterbildenden Merkmale sind Gegenstand des Unteranspruchs 10.

Der Kern der Erfindung hinsichtlich des Verfahrens zum Betrieb eines Funknetzwerks mit geringer Leistungsaufnahme ist, dass eine erste Bitübertragungseinheit und eine daran angeschlossenen erste Sicherungseinheit mit einer ersten übergeordnete Netzwerkeinheit verbunden ist und zwischen der ersten Sicherungseinheit und der ersten übergeordneten Netzwerkeinheit eine erste Netzwerkbrückenanordnung über eine nachgeschaltete Verbindungsstruktur mit einer zweiten Netzwerkbrückenanordnung kommuniziert, womit eine zweite übergeordnete Netzwerkeinheit mit der ersten übergeordneten Netzwerkeinheit verbunden wird.

Mit Vorteil weisen die erste und die zweite Netzwerkbrückenanordnung eine erste bzw. zweite Managementeinheit auf, die zum Koppeln der übergeordneten Netzwerkeinheiten Adressdaten austauschen.

### Kurze Beschreibung der Zeichnungen

Im Folgenden wird die Erfindung anhand von Figuren beispielhaft erläutert. Gleiche Gegenstände sind in den Figuren grundsätzlich mit gleichen Bezugszeichen bezeichnet. An dieser Stelle wird darauf hingewiesen, dass die Figuren Standard-Schnittstellen-Verbindungen zwischen einzelnen Einheiten aufweisen, die auf dem Standard IEEE 802.15.4 beruhen und im Folgenden ohne weitere Erörterung als bekannt vorausgesetzt werden. Es zeigen rein schematisch die
- Fig. 1: anhand eines Blockdiagramms die wesentlichen Funktionseinheiten eines erfindungsgemässen Funknetzwerks mit einem Lichtleiter (Optical Fiber) als Verbindungsstruktur zwischen zwei übergeordneten Netzwerkeinheiten (Application Layer);
- Fig. 2: eine Ausführungsvariante des erfindungsgemässen Funknetzwerks mit einer drahtgebundenen Verbindungsstruktur (LINE);
- Fig. 3: eine weitere Ausführungsvariante des erfindungsgemässen Funknetzwerks mit einer auf Funktechnologie basierenden Verbindungsstruktur (WIRELESS);
- Fig. 4: eine weitere Ausführungsvariante des erfindungsgemässen Funknetzwerks mit übergeordneten Netzwerkeinheiten basierend auf dem ZigBee-Standard gemäss IEEE 802.15.4 mit einer Kunststofflichtleiterverbindung als Verbindungsstruktur, und
- Fig. 5: schematische Darstellung einer Hausinstallation des erfindungsgemässen Funknetzwerks.

### Wege zur Ausführung der Erfindung

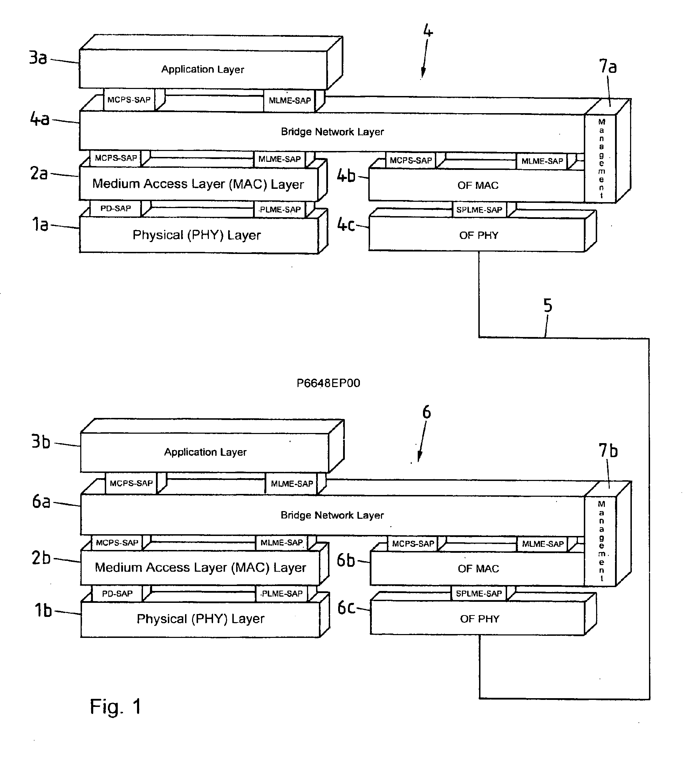

Fig. 1 zeigt anhand eines Blockdiagramms das erfindungsgemässe Funknetzwerk mit geringer Leistungsaufnahme, wobei entsprechend dem Standard IEEE 802.15.4 für solche Netzwerke eine erste Bitübertragungseinheit 1a (Physical Layer, PHY), eine erste Sicherungseinheit 2a (Medium Access Layer, MAC) und eine erste übergeordnete Netzwerkeinheit 3a (Application Layer) in Wirkverbindung zueinander stehen. Mit "übergeordneter Netzwerkeinheit" ist an dieser Stelle jede mögliche Ausführungsform solcher Einheiten umfasst, wobei -nicht abschliessend- lediglich die Einheiten gemäss 6loWPAN, ZigBee, WirelessHART oder MiWi namentlich erwähnt werden.

Die erste Bitübertragungseinheit 1a, die erste Sicherungseinheit 2a und die übergeordnete. Netzwerkeinheit 3a sind über die bekannten Schnittstellen PD-SAP, PLME-SAP, MCPS-SAP und MLME-SAP miteinander verbunden, welche hier nicht näher erläutert werden.

Erfindungsgemäss ist zwischen der ersten Sicherungseinheit 2a und der ersten übergeordneten Netzwerkeinheit 3a eine erste Netzwerkbrückenanordnung 4 installiert, die eine erste Netzwerkbrückeneinheit 4a (Bridge Network Layer), eine zweite Sicherungseinheit 4b (OF MAC) und eine zweite Bitübertragungseinheit 4c (OF PHY) umfasst. Die hier gezeigte, zweite Bitübertragungseinheit 4c ist für die Kommunikation über einen Lichtleiter (Optical Fiber, OF) ausgelegt. Neben den bekannten Schnittstellen MCPS-SAP und MLME-SAP sind die erste Netzwerkbrückeneinheit 4a und die zweite Sicherungseinheit 4b über eine erste Managementeinheit 7a miteinander verbunden. Ferner verbindet die bekannte Schnittstelle SPLME-SAP die zweite Sicherungseinheit 4b mit der zweiten Bitübertragungseinheit 4c.

Des Weiteren zeigt Fig. 1 eine vierte Bitübertragungseinheit 1b (Physical Layer, PHY), eine vierte Sicherungseinheit 2b (Medium Access Layer, MAC) die mit einer zweiten übergeordneten Netzwerkeinheit 3b (Application Layer) in Wirkverbindung stehen. Auch hier sind die vierte Bitübertragungseinheit 1b, die vierte Sicherungseinheit 2b und die zweite übergeordnete Netzwerkeinheit 3b sind über die bekannten Schnittstellen PD-SAP, PLME-SAP, MCPS-SAP und MLME-SAP miteinander verbunden.

Erfindungsgemäss ist auch hier zwischen der vierten Sicherungseinheit 2b und der zweiten übergeordneten Netzwerkeinheit 3b eine zweite Netzwerkbrückenanordnung 6 installiert, die eine zweite Netzwerkbrückeneinheit 6a (Bridge Network Layer), eine dritte Sicherungseinheit 6b (OF MAC) und eine dritte Bitübertragungseinheit 6c (OF PHY) umfasst. Die hier gezeigte, dritte Bitübertragungseinheit 6c ist für die Kommunikation über einen Lichtleiter (Optical Fiber, OF) ausgelegt. Neben den bekannten Schnittstellen MCPS-SAP und MLME-SAP sind die zweite Netzwerkbrückeneinheit 6a und die dritte Sicherungseinheit 6b über eine zweite Managementeinheit 7b miteinander verbunden. Ferner verbindet die bekannte Schnittstelle SPLME-SAP die dritte Sicherungseinheit 6b mit der dritten Bitübertragungseinheit 6c.

Die erste und die zweite Netzwerkeinheit 3a, b haben auf der Funkseite keine gemeinsame Abdeckung, sondern sind mittels eines Lichtleiters als Verbindungsstruktur 5 miteinander verbunden. Zum Koppeln der beiden Netzwerkeinheiten 3a, b tauschen die erste Managementeinheit 7a und die zweite Managementeinheit 7b initial Adressdaten aus, damit eine Kommunikation bereitgestellt werden kann.

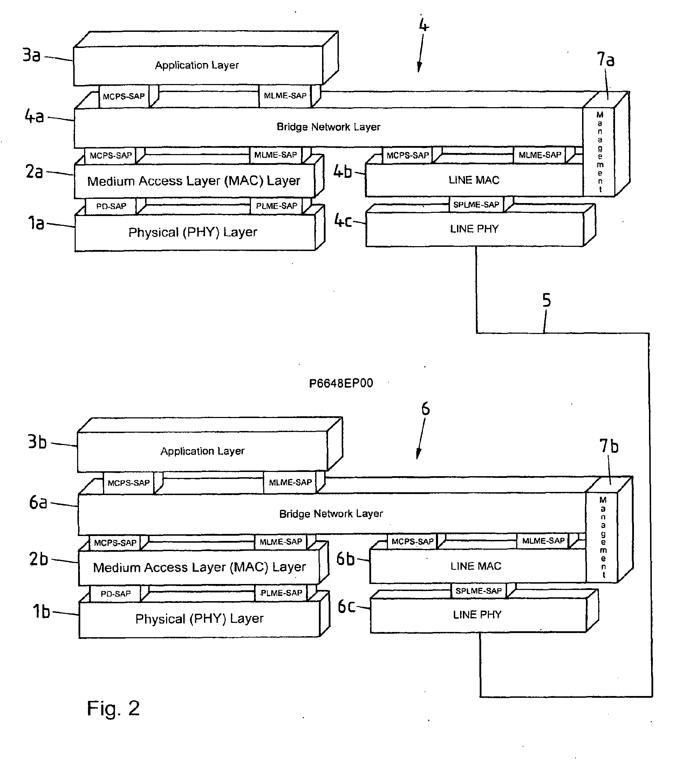

Die erfindungsgemässe Ausführungsform des Funknetzwerks in Fig. 2 unterscheidet sich gegenüber der Ausführungsform in Fig. 1 lediglich durch die Wahl der Verbindungsstruktur 5, die hier als drahtgebundene Verbindung ausgeführt ist. Entsprechend sind die zweiten und dritten Sicherungseinheiten 4b, 6b (LINE MAC) bzw. die zweiten und dritten Bitübertragungseinheiten 4c, 6c (LINE PHY) für die drahtgebundene Kommunikation über die Verbindungsstruktur 5 ausgelegt.

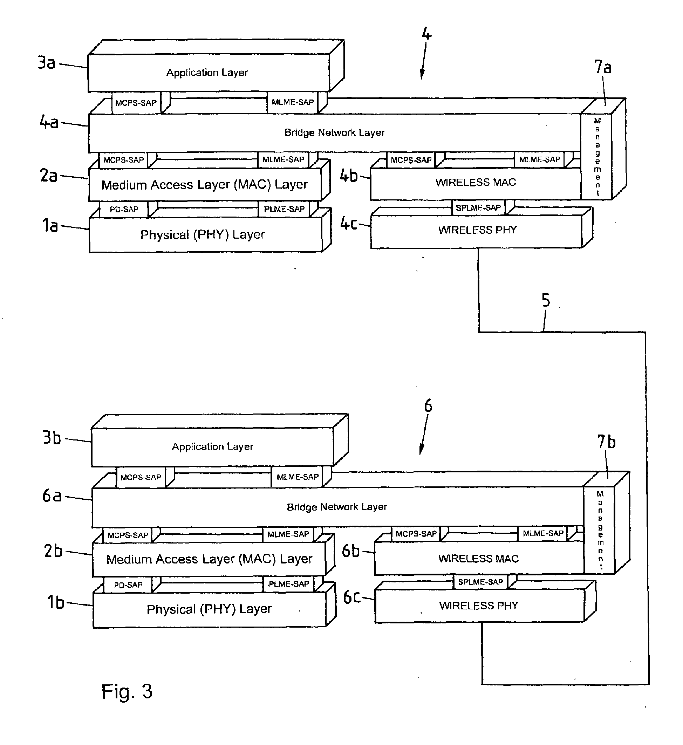

Eine weitere erfindungsgemässe Ausführungsform des Funknetzwerks zeigt Fig. 3, die sich gegenüber den vorhergehenden Ausführungsformen lediglich durch die Wahl der Verbindungsstruktur 5, die hier als Funkverbindung ausgeführt ist, unterscheidet. Konsequenterweise sind die zweiten und dritten Sicherungseinheiten 4b, 6b (WIRELESS MAC) bzw. die zweiten und dritten Bitübertragungseinheiten 4c, 6c (WIRELESS PHY) für die Kommunikation per Funk über die Verbindungsstruktur 5 ausgelegt.

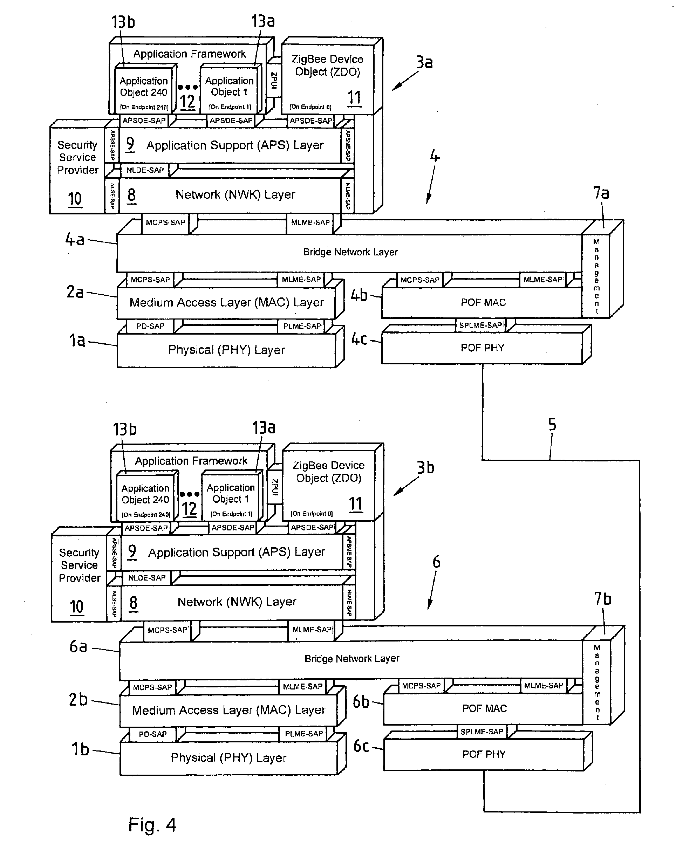

Hinsichtlich der Verbindungsstruktur 5 zeigt die Fig. 4 eine weitere Ausführungsform des erfindungsgemässen Funknetzwerks. Die Verbindungsstruktur 5 ist hier als Kunststofflichtleiter (Plastic Optical Fiber, POF) ausgeführt, womit die zweiten und dritten Sicherungseinheiten 4b, 6b (POF MAC) bzw. die zweiten und dritten Bitübertragungseinheiten 4c, 6c (POF PHY) für die Kommunikation über Kunststofflichtleiter als Verbindungsstruktur 5 ausgelegt sind.

Ferner sind in der Fig. 4 die übergeordneten Netzwerkeinheiten 3a, 3b gemäss dem bekannten ZigBee-Standard nach IEEE 802.15.4 ausgeführt; eine nähere Erörterung der einzelnen Einheiten 8, 9, 10, 11, 12, 13a, b erübrigt sich vor diesem Hintergrund.

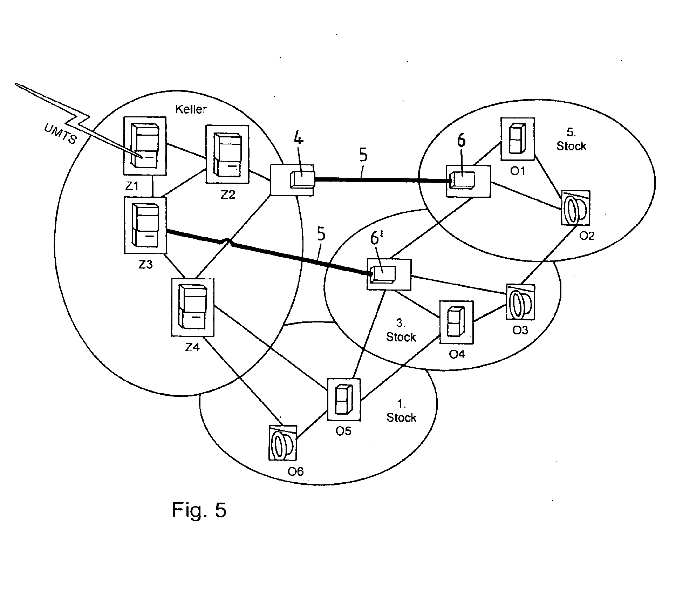

In Fig. 5 ist eine Hausinstallation des erfindungsgemässen Funknetzwerks gezeigt, bei der Verbraucher 02, 03, 06 und Anzeigeeinheiten 01, 04, 05 mit Energiezählern Z1, Z2, Z3, Z4, die in einem Keller installiert sind, miteinander kommunizieren. Um die Kommunikationspfade unterscheiden zu können, sind zwei Strichstärken der Verbindungslinien gewählt worden; die dünnen Verbindungslinien stellen eine Kommunikation über den ZigBee-Standard dar und die dicken Verbindungslinien stellen einen Kommunikation über die Verbindungsstruktur 5 gemäss der Erfindung dar. Wie einfach zu erkennen ist, hat beispielsweise die Anzeigeeinheit 01 im 5. Stock keine unmittelbare Funkverbindung mit einem Zähler im Keller; hingegen weist diese Anzeigeeinheit 01 eine mittelbare Verbindung über die Netzwerkbrückenanordnung 6, die Verbindungsstruktur 5 und die Netzwerkbrückeneinheit 4 und zugehörige, weiterführende ZigBee-Kommunikation eine Verbindung mit im Keller installierten Energiezählern Z1 bis Z4 auf. Dieselbe Verbindung weist ebenfalls der Verbraucher 02 im 5. Stock mit den Energiezählern Z1 bis Z4 im Keller auf; des Weiteren kann der Verbraucher 02 auch über eine ZigBee-Kommunikation und eine weitere Netzwerkbrückeneinheit 6' direkt mit dem Zähler Z3 über eine Verbindungsstruktur 5 kommunizieren, wobei dieser Zähler Z3 ebenfalls mit einer hier nicht dargestellten -internen- Netzwerkbrückenanordnung ausgestattet ist.

## Patentansprüche

1. Funknetzwerk mit geringer Leistungsaufnahme, insbesondere ein so genanntes Low Rate Wireless Personal Area Network (LR-WPAN), umfassend eine erste Bitübertragungseinheit (1a, Phyiscal Layer) und eine daran angeschlossenen erste Sicherungseinheit (2a, Medium Access Layer), wobei auf dieser ersten Sicherungseinheit (2a) eine erste übergeordnete Netzwerkeinheit (3a) angeordnet ist, **dadurch gekennzeichnet, dass** zwischen der ersten Sicherungseinheit (2a) und der ersten übergeordneten Netzwerkeinheit (3a) eine erste Netzwerkbrückenanordnung (4) über eine nachgeschaltete Verbindungsstruktur (5) mit einer zweiten Netzwerkbrückenanordnung (6) verbunden ist, die eine zweite übergeordnete Netzwerkeinheit (3b) mit der ersten übergeordneten Netzwerkeinheit (3a) zwecks Kommunikation verbindet.

2. Funknetzwerk gemäss Anspruch 1, **dadurch gekennzeichnet, dass** die Übertragungsreichweite mit der ersten und zweiten Netzwerkbrückenanordnung (4, 6) im Verhältnis zu der Übertragungsreichweite innerhalb einer jeden übergeordneten Netzwerkeinheit (3a, b) als Fernverbindung zwischen diesen beiden übergeordneten Netzwerkeinheiten (3a, b) ausgebildet ist.

3. Funknetzwerk nach einem der vorhergehenden Ansprüche, **dadurch gekennzeichnet, dass** die erste Netzwerkbrückenanordnung (4) eine erste Netzwerkbrückeneinheit (4a), eine nachgeschaltete, zweite Sicherungseinheit (4b) verbunden mit einer zweiten Bitübertragungseinheit (4c) umfasst.

4. Funknetzwerk nach Anspruch 3, **dadurch gekennzeichnet, dass** die zweite Netzwerkbrückenanordnung (6) eine zweite Netzwerkbrückeneinheit (6a), eine nachgeschaltete, dritte Sicherungseinheit (6b) verbunden mit einer dritten Bitübertragungseinheit (6c) umfasst.

5. Funknetzwerk nach Anspruch 4, **dadurch gekennzeichnet, dass** die Verbindungsstruktur (5) zwischen der zweiten Bitübertragungseinheit (4c) und der dritten Bitübertragungseinheit (6c) der ersten bzw. der zweiten Netzwerkbrückenanordnung (4, 6) angeordnet ist.

6. Funknetzwerk nach Anspruch 5, **dadurch gekennzeichnet, dass** zwischen der zweiten Sicherungseinheit (4b) und der zweiten Bitübertragungseinheit (4c) eine erste Managementeinheit (7a) und zwischen der dritten Sicherungseinheit (6b) und der dritten Bitübertragungseinheit (6c) eine zweite Managementeinheit (7b) angeordnet ist, zwecks eines initialen Adressdatenaustauschs zum Koppeln der beiden übergeordneten Netzwerkeinheiten (3a, b).

7. Funknetzwerk nach einem der vorhergehenden Ansprüche, **dadurch gekennzeichnet, dass** die Verbindungsstruktur (5) bidirektional als eine Drahtverbindung und/oder eine Funkverbindung und/oder eine Lichtleiterverbindung, insbesondere als eine Kunststofflichtleiterverbindung, ausgebildet.

8. Funknetzwerk nach einem der vorhergehenden Ansprüche, **dadurch gekennzeichnet, dass** die übergeordneten Netzwerkeinheiten (3a, b) gemäss dem ZigBee-Standard (IEEE 802.15.4) ausgebildet sind.

9. Verfahren zum Betrieb eines Funknetzwerks mit geringer Leistungsaufnahme, wobei eine erste Bitübertragungseinheit (1 a, Phyiscal Layer) und eine daran angeschlossenen erste Sicherungseinheit (2a, Medium Access Layer) mit einer ersten übergeordnete Netzwerkeinheit (3a) verbunden ist, **dadurch gekennzeichnet, dass** zwischen der ersten Sicherungseinheit (2a) und der ersten übergeordneten Netzwerkeinheit (3a) eine erste Netzwerkbrückenanordnung (4) über eine nachgeschaltete Verbindungsstruktur (5) mit einer zweiten Netzwerkbrückenanordnung (6) kommuniziert und somit eine zweite übergeordnete Netzwerkeinheit (3b) mit der ersten übergeordneten Netzwerkeinheit (3a) verbunden wird.

10. Verfahren nach Anspruch 9, **dadurch gekennzeichnet, dass** die erste und die zweite Netzwerkbrückenstruktur (4, 6) eine erste bzw. zweite Managementeinheit (7a, b) aufweisen, wobei diese Managementeinheiten (7a, b) Adressdaten zum Koppeln der übergeordneten Netzwerkeinheiten (3a, b) austauschen.
